# EUROPEAN PATENT APPLICATION

(11) **EP 2 848 527 A1**
(43) Date of publication of application: **18.03.2015**
(21) Application number: 14180587.9
(22) Date of filing: 11.08.2014
(51) Int. Cl.: B64D 11/00

(54) **Aircraft system control and reporting via a mobile device**

(30) Priority: 14.08.2013 US 201313966960
(71) Applicant: The Boeing Company, Chicago, IL 60606-2016 (US)
(72) Inventor: OWYANG, Ethan C., Chicago, IL Illinois 60606-2016 (US); KIRKLAND, David T., Chicago, IL Illinois 60606-2016 (US)
(74) Representative: Thorniley, Peter

(57) **Abstract**

A method and apparatus for controlling a plurality of different systems on an aircraft. A mobile device (162) is connected to an aircraft network (144) on the aircraft. The mobile device (162) is moveable to a plurality of different locations on the aircraft. The mobile device (162) receives input from an operator identifying controls for controlling functions performed by the plurality of different systems (121) on the aircraft. The controls are sent from the mobile device (162) to the plurality of different systems (121) on the aircraft via the aircraft network (144).

## Description

### BACKGROUND INFORMATION

The present disclosure relates generally to systems and methods for controlling various systems on an aircraft and for reporting information from such systems. More particularly, the present disclosure relates to controlling various functions performed by different aircraft systems and reporting information from such systems using a mobile device.

An aircraft may include various systems for performing various functions on the aircraft. Different systems on the aircraft may be configured to perform different functions on the aircraft. For example, without limitation, systems for performing various functions on an aircraft may include an in-flight entertainment system, a public address system, an information system, a cabin services system, an attendant call system, other aircraft systems, or various combinations of systems for performing various functions on the aircraft.

The functions performed by various systems on the aircraft may be controlled by a human operator. For example, without limitation, the functions performed by systems on the aircraft may be controlled by a member of the aircraft crew, a passenger on the aircraft, maintenance personnel, or any other appropriate operator.

An operator may control the functions performed by a system on an aircraft by interaction with an operator interface for the system. For example, the operator interface for a system on an aircraft may be configured to receive input from an operator and to control the functions performed by the system in response to the input from the operator.

The operator interface for a system on an aircraft may be a dedicated operator interface. A dedicated operator interface may be configured for controlling only the functions performed by a specific system on an aircraft. Functions performed by various different systems on an aircraft therefore may be controlled using various different dedicated operator interfaces.

Dedicated operator interfaces for systems on an aircraft may be connected to the systems by wires. Such dedicated operator interfaces may not be mobile or the mobility of such dedicated operator interfaces may be limited. For example, dedicated operator interfaces for systems on an aircraft may be mounted in fixed locations on the aircraft. Further, the number of dedicated operator interfaces for a system on an aircraft may be limited.

Accordingly, it would be desirable to have a method and apparatus that takes into account one or more of the issues discussed above as well as possibly other issues.

### SUMMARY

Embodiments of the present disclosure provide a method of controlling a plurality of different systems on an aircraft. A mobile device is connected to an aircraft network on the aircraft. The mobile device is moveable to a plurality of different locations on the aircraft. The mobile device receives input from an operator identifying controls for controlling functions performed by the plurality of different systems on the aircraft. The controls are sent from the mobile device to the plurality of different systems on the aircraft via the aircraft network.

Embodiments of the present disclosure also provide an apparatus comprising an aircraft network data processing system on an aircraft. The aircraft network data processing system is configured to receive controls for controlling functions performed by a plurality of different systems on the aircraft from a mobile device. The mobile device is moveable to a plurality of different locations on the aircraft. The aircraft network data processing system also is configured to deliver the controls received from the mobile device to the plurality of different systems.

Embodiments of the present disclosure also provide another method of controlling a plurality of different systems on an aircraft. An aircraft network data processing system on the aircraft receives controls for controlling functions performed by the plurality of different systems on the aircraft from a mobile device. The mobile device is moveable to different locations on the aircraft. The controls from the mobile device are delivered to the plurality of different systems by the aircraft network data processing system.

A method of controlling a plurality of different systems on an aircraft, comprising connecting a mobile device to an aircraft network on the aircraft, wherein the mobile device is moveable to a plurality of different locations on the aircraft; receiving, by the mobile device, input from an operator identifying controls for controlling functions performed by the plurality of different systems on the aircraft; and sending the controls from the mobile device to the plurality of different systems on the aircraft via the aircraft network.

The method further includes connecting the mobile device to the aircraft network comprises connecting the mobile device to a wireless network on the aircraft via a wireless connection; and sending the controls from the mobile device to the plurality of different systems on the aircraft comprises sending the controls from the mobile device to the aircraft network via the wireless connection. The method further includes connecting the mobile device to the aircraft network comprises connecting the mobile device to the aircraft network via a wired connection; and sending the controls from the mobile device to the plurality of different systems on the aircraft comprises sending the controls from the mobile device to the aircraft network via the wired connection.

The method further comprising displaying a plurality of control interfaces for the functions performed by the plurality of different systems on a user interface on the mobile device; and receiving the input from the operator via the plurality of control interfaces on the user interface. The method further comprising receiving, by the mobile device, reports from the plurality of different systems on the aircraft via the aircraft network; and storing the reports on the mobile device.

The method further comprising receiving, by the mobile device, reports from the plurality of different systems on the aircraft via the aircraft network; and displaying the reports on a plurality of report interfaces for the plurality of different systems on a user interface on the mobile device. The method further includes the plurality of different systems on the aircraft are selected from an in-flight entertainment system, a public address system, an information system, a cabin services system, and an attendant call system.

An apparatus comprising an aircraft network data processing system on an aircraft, wherein the aircraft network data processing system is configured to receive controls for controlling functions performed by a plurality of different systems on the aircraft from a mobile device, wherein the mobile device is moveable to a plurality of different locations on the aircraft; and deliver the controls received from the mobile device to the plurality of different systems.

The apparatus further includes wherein the aircraft network data processing system is configured to receive the controls from the mobile device via a wired connection to the mobile device. The apparatus further includes wherein the aircraft network data processing system is configured to receive the controls from the mobile device via a wireless network.

The apparatus further includes wherein the aircraft network data processing system is configured to provide a number of system control applications to the mobile device, wherein the number of system control applications define control interfaces for the functions performed by the plurality of different systems. The apparatus further includes wherein the mobile device is configured to display a plurality of control interfaces for the functions performed by the plurality of different systems on a user interface on the mobile device; and receive input identifying the controls from an operator via the plurality of control interfaces on the user interface.

The apparatus further includes wherein the aircraft network data processing system is configured to receive reports from the plurality of different systems and to send the reports to the mobile device. The apparatus further includes wherein the mobile device is configured to display the reports on a plurality of report interfaces for the plurality of different systems on a user interface on the mobile device. The apparatus further includes wherein the mobile device is configured to store the reports on the mobile device.

The apparatus further includes wherein the plurality of different systems on the aircraft are selected from an in-flight entertainment system, a public address system, an information system, a cabin services system, and an attendant call system.

A method of controlling a plurality of different systems on an aircraft, comprising receiving, by an aircraft network data processing system on the aircraft, controls for controlling functions performed by the plurality of different systems on the aircraft from a mobile device, wherein the mobile device is moveable to a plurality of different locations on the aircraft; and delivering the controls from the mobile device to the plurality of different systems by the aircraft network data processing system.

The method further includes receiving the controls from the mobile device comprises receiving the controls from the mobile device via a connection selected from a wired connection and a wireless connection. The method further comprising providing a number of system control applications from the aircraft network data processing system to the mobile device, wherein the number of system control applications define control interfaces for the functions performed by the plurality of different systems.

The method further comprising receiving reports from the plurality of different systems by the aircraft network data processing system; and sending the reports from the aircraft network data processing system to the mobile device.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and features thereof will best be understood by reference to the following detailed description of illustrative embodiments of the present disclosure when read in conjunction with the accompanying drawings, wherein:
**Figure 1** is an illustration of a block diagram of an apparatus for aircraft system control and reporting via a mobile device in accordance with an illustrative embodiment;
**Figure 2** is an illustration of a block diagram of a mobile device for aircraft system control and reporting in accordance with an illustrative embodiment;
**Figure 3** is an illustration of a block diagram of aircraft systems in accordance with an illustrative embodiment;
**Figure 4** is an illustration of a flowchart of a process for controlling aircraft systems via a mobile device in accordance with an illustrative embodiment;
**Figure 5** is an illustration of a flowchart of a process for aircraft system reporting via a mobile device in accordance with an illustrative embodiment;
**Figure 6** is an illustration of a flowchart of a process for aircraft system control and reporting in accordance with an illustrative embodiment; and
**Figure 7** is an illustration of a data processing system in accordance with an illustrative embodiment.

### DETAILED DESCRIPTION

The different illustrative embodiments recognize and take into account a number of different considerations. "A number", as used herein with reference to items, means one or more items. For example, "a number of different considerations" means one or more different considerations.

The different illustrative embodiments recognize and take into account that the functions performed by systems on an aircraft may be controlled by operator interactions with dedicated operator interfaces for the systems. Such dedicated operator interfaces may be placed at a limited number of substantially fixed locations in the aircraft. Therefore, an operator may need to be at a location on the aircraft that is near the location of a dedicated operator interface, or move to such a location, to use the dedicated operator interface to control the functions performed by a system on the aircraft.

The different illustrative embodiments recognize and take into account that it may be desirable for an operator to be able to control the functions performed by a system on the aircraft from any appropriate location on the aircraft. Therefore, the different illustrative embodiments recognize and take into account that it may be desirable for an operator interface for controlling the functions performed by a system on an aircraft to be mobile.

The different illustrative embodiments recognize and take into account that dedicated operator interfaces for controlling the functions performed by systems on an aircraft may be connected by wires to the systems. The wired connections between the operator interfaces and the systems that are controlled by the operator interfaces may limit the mobility of the operator interfaces by an undesired amount. The different illustrative embodiments recognize and take into account that an operator interface configured for controlling the functions performed by a system on an aircraft via a wireless connection may be more mobile than an operator interface that is connected by wires to the system.

The different illustrative embodiments also recognize and take into account that a dedicated operator interface for controlling the functions performed by a system on an aircraft may not be used to control the functions performed by other different systems on the aircraft. Therefore, an operator may be required to use multiple different dedicated operator interfaces to control the functions performed by various different systems on the aircraft.

The different illustrative embodiments recognize and take into account that it may be desirable for an operator to be able to control the functions performed by various different systems on an aircraft using a single operator interface. The different illustrative embodiments also recognize and take into account that various systems on the aircraft may be configured to report various types of information to an operator. For example, a system on an aircraft may be configured to report information to an operator in response to a request from the operator.

Alternatively, or additionally, a system on an aircraft may be configured to report information to an operator automatically without a request from the operator for such information. For example, without limitation, a system on an aircraft may be configured to report information to an operator automatically on a periodic basis, in response to the occurrence of an event, or both on a periodic basis and in response to the occurrence of an event.

The different illustrative embodiments recognize and take into account that it may be desirable for an operator to be able to receive information reports from a system on an aircraft at any appropriate location on the aircraft using a mobile operator interface. The different illustrative embodiments also recognize and take into account that it may be desirable for an operator to be able to receive information reports from various different systems on an aircraft using a single operator interface. It also may be desirable that the information reports from aircraft systems that are received using a mobile operator interface may be viewed by an operator on the mobile operator interface.

Alternatively, or additionally, it may be desirable that information reports from aircraft systems that are received using a mobile operator interface may be stored on the mobile operator interface for later transfer to another device or system for analysis or for any other appropriate purpose or combination of purposes. For example, without limitation, it may be desirable that information reports from aircraft systems on a commercial passenger aircraft or other aircraft may be received using a mobile operator interface in accordance with an illustrative embodiment and may be stored on the mobile operator interface. The information reports from the aircraft systems that are stored on the mobile operator interface then may be transferred, at an appropriate time and in an appropriate manner, to a data processing system at the office of an airline or another appropriate location off board the aircraft for analysis or another appropriate purpose.

One or more of the illustrative embodiments provide a system and method for controlling the functions performed by systems on an aircraft via a mobile device. In accordance with an illustrative embodiment, an operator may use the mobile device to control the functions performed by various different systems on an aircraft from any appropriate location on the aircraft. The operator also may use the mobile device to receive information reports from various different systems on the aircraft at any appropriate location on the aircraft. The operator may use the mobile device to view the information reports received from the various different systems on the aircraft.

Alternatively, or additionally, the information reports received from the various different systems on the aircraft may be stored on the mobile device. For example, without limitation, the information reports received from the various different systems on the aircraft may be stored on the mobile device for analysis on the mobile device, for later transfer from the mobile device to another device or system for any appropriate use, or both.

In accordance with an illustrative embodiment, a wireless network on an aircraft may be configured to provide wireless connections for a number of mobile devices. Each of the mobile devices may be configured to allow an operator to identify controls for controlling the functions performed by various different systems on the aircraft. Controls for controlling the functions performed by various different systems on the aircraft may be sent from a mobile device at any appropriate location on the aircraft via a wireless connection to an aircraft network data processing system. The aircraft network data processing system may be connected to the various different systems on the aircraft via an aircraft network on the aircraft. The aircraft network data processing system may be configured to deliver the controls received from the mobile device via the wireless network to the appropriate systems on the aircraft via the aircraft network to control the functions performed by the systems.

Alternatively, or additionally, controls for controlling the functions performed by various different systems on an aircraft may be sent from the mobile device at any appropriate location on the aircraft via a wired connection to the aircraft network data processing system. In this case, the aircraft network data processing system may be configured to deliver the controls received from the mobile device via the wired connection to the appropriate systems on the aircraft via the aircraft network.

The aircraft network data processing system also may be configured to receive information reports from the various different systems on the aircraft via the aircraft network. The aircraft network data processing system may be configured to send the information reports received from various different systems on the aircraft to a mobile device at any appropriate location on the aircraft via the wireless connection to the mobile device provided by the wireless network on the aircraft. Alternatively, or additionally, the aircraft network data processing system may be configured to send the information reports received from various different systems on the aircraft to a mobile device at any appropriate location on the aircraft via a wired connection.

The mobile device may be configured to display, to an operator, the information reports from the various different systems on the aircraft that are received by the mobile device from the aircraft network data processing system via the wireless connection or the wired connection. Alternatively, or additionally, the mobile device may be configured to store, on the mobile device, the information reports from the various different systems on the aircraft that are received from the aircraft network data processing system. In this case, the mobile device also may be configured to transfer the information reports from the various different systems on the aircraft that are stored on the mobile device from the mobile device to another device or system.

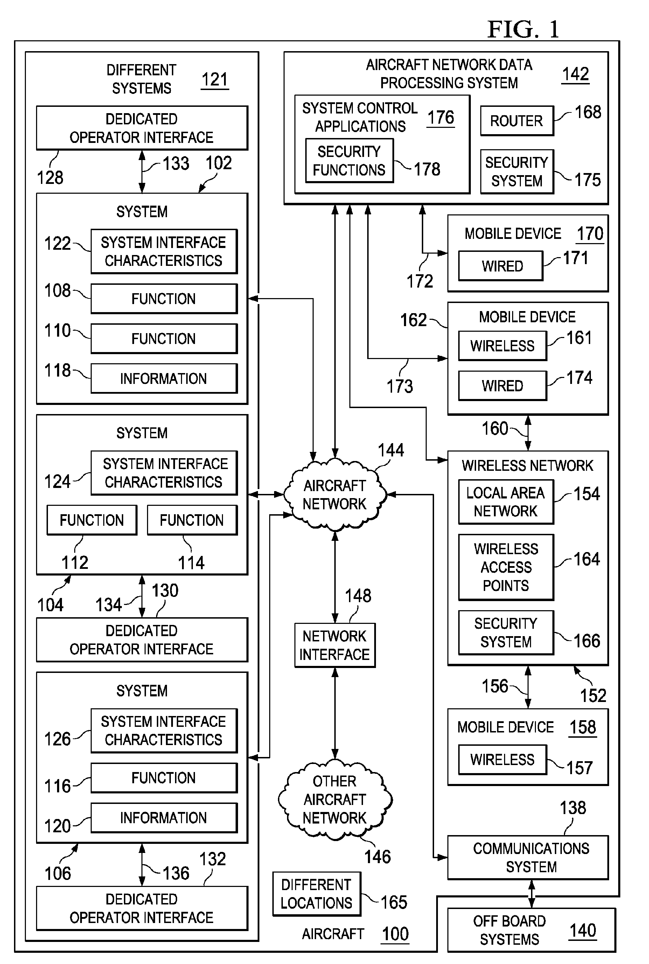

Turning to **Figure 1****,** an illustration of a block diagram of an apparatus for aircraft system control and reporting via a mobile device is depicted in accordance with an illustrative embodiment. In this example, aircraft **100** may be any appropriate type of aircraft. For example, without limitation, aircraft **100** may be a commercial or private passenger aircraft, a cargo aircraft, a military or other government aircraft, or any other aircraft configured for any appropriate purpose or mission. Aircraft **100** may be a fixed wing, rotary wing, or lighter than air aircraft.

Aircraft **100** may include various systems for performing various functions on aircraft **100.** For example, aircraft **100** may include system **102,** system **104,** and system **106** on aircraft **100.** Systems **102, 104,** and **106** may comprise any appropriate systems for performing any appropriate functions on aircraft **100.** Systems **102, 104,** and **106** may be referred to as aircraft systems. Aircraft **100** in accordance with an illustrative embodiment may have more or fewer than three systems. The illustrative embodiments may be used to control the functions performed by any appropriate number of systems on an aircraft.

Systems **102, 104,** and **106** may be configured to perform various functions on aircraft **100.** For example, system **102** may be configured to perform function **108** and function **110** on aircraft **100.** System **104** may be configured to perform function **112** and function **114** on aircraft **100.** System **106** may be configured to perform function **116** on aircraft **100.** Functions **108, 110, 112, 114,** and **116** may comprise any appropriate functions that may be performed by any appropriate systems on aircraft **100.** More or fewer than five functions may be performed by various systems on aircraft **100.**

The illustrative embodiments may be used to control any appropriate number of functions performed by various systems on an aircraft. Various systems on aircraft **100** may be configured to report various types of information to an operator. For example, system **102** may be configured to report information **118** to an operator. System **106** may be configured to report information **120** to an operator. Information **118** and information **120** may comprise any appropriate types of information that may be reported to an operator by system **102** and system **106,** respectively. For example, without limitation, information **118,** information **120,** or both, may comprise status information indicating the status of a system on aircraft **100,** status information indicating the status of any appropriate number of functions performed by a system on aircraft **100,** or any other appropriate type of information or combinations of various types of information that may be provided by a system on aircraft **100.** Any appropriate number of systems on an aircraft may be configured to report any appropriate number of various types of information to an operator.

System **102** on aircraft **100** may be configured to report information **118** to an operator in response to a request from the operator. Alternatively, or additionally, system **102** on aircraft **100** may be configured to report information **118** to an operator automatically without a request from the operator for such information. For example, without limitation, system **102** on aircraft **100** may be configured to report information **118** to an operator automatically on a periodic basis, in response to the occurrence of an event, or both on a periodic basis and in response to the occurrence of an event.

Similarly, system **106** on aircraft **100** may be configured to report information **120** to an operator in response to a request from the operator, automatically without a request from the operator for such information, or both in response to a request from the operator and automatically without a request from the operator. In any case, the illustrative embodiments may be used by an operator to receive any appropriate number of reports of various types of information from any appropriate number of various systems on an aircraft.

Various systems on an aircraft may be configured to perform various different functions on the aircraft, to report different information, or both to perform various different functions on the aircraft and report different information. Any systems on an aircraft that are configured to perform different functions, to report different information, or both to perform different functions and to report different information may be different systems **121.** For example, system **102,** system **104,** and system **106** are configured to perform different functions on aircraft **100** and to report different information. Therefore, system **102,** system **104,** and system **106** are different systems **121** on aircraft **100.**

Each system on an aircraft may be defined by various system interface characteristics. The various system interface characteristics for a system on an aircraft may define the ways in which an operator may interact with the system to control the functions performed by the system, to receive the information reported by the system, or both to control the functions performed by the system and to receive the information reported by the system. For example, the system interface characteristics for a system on an aircraft may be defined by the functions that may be performed by the system and the ways in which the functions may be controlled by an operator. The system interface characteristics for a system on an aircraft also, or alternatively, may be defined by the information that may be reported by the system and the ways in which that information may be reported to an operator.

For example, system **102** on aircraft **100** may be defined by system interface characteristics **122.** System **104** on aircraft **100** may be defined by system interface characteristics **124.** System **106** on aircraft **100** may be defined by system interface characteristics **126.** Different systems **121** on aircraft **100** may be configured to perform different functions, to report different information, or both to perform different functions and to report different information. Therefore, different systems **121** on aircraft **100** may have different system interface characteristics.

The system interface characteristics for a system on an aircraft may be used to implement an operator interface for the system. An operator interface for a system on an aircraft that is configured in accordance with the system interface characteristics for the system may allow an operator to interact with the system to control the functions performed by the system, to receive the information reported by the system, or both to control the functions performed by the system and to receive the information reported by the system.

For example, dedicated operator interface **128** may be configured in accordance with system interface characteristics **122** for system **102** on aircraft **100.** Therefore, an operator may use dedicated operator interface **128** to control function **108** and function **110** performed by system **102** and to receive information **118** reported by system **102.** Dedicated operator interface **130** may be configured in accordance with system interface characteristics **124** for system **104** on aircraft **100.** Therefore, an operator may use dedicated operator interface **130** to control function **112** and function **114** performed by system **104.** Dedicated operator interface **132** may be configured in accordance with system interface characteristics **126** for system **106** on aircraft **100.** Therefore, an operator may use dedicated operator interface **132** to control function **116** performed by system **106** and to receive information **120** reported by system **106.**

Each one of dedicated operator interfaces **128, 130,** and **132** may be configured in accordance with system interface characteristics **122, 124,** or **126** for only one corresponding system **102, 104,** or **106** on aircraft **100.** Therefore, each one of dedicated operator interfaces **128, 130,** and **132** may be used to control and receive reports of information from only the corresponding system **102, 104,** or **106** on aircraft **100** for which dedicated operator interface **128, 130,** or **132** was configured. Therefore, an operator may be required to use multiple different dedicated operator interfaces **128, 130,** and **132** to control and receive reports of information from the various different systems **121** on aircraft **100.**

Dedicated operator interface **128** may be connected to system **102** by connection **133.** Dedicated operator interface **130** may be connected to system **104** by connection **134.** Dedicated operator interface **132** may be connected to system **106** by connection **136.** For example, one or more of connections **133, 134,** and **136** between dedicated operator interfaces **128, 130,** and **132** and corresponding systems **102, 104,** and **106** on aircraft **100** may be wired connections.

In this case, dedicated operator interfaces **128, 130,** and **132** may not be mobile or may have limited mobility. For example, dedicated operator interfaces **128, 130,** and **132** with wired connections **133, 134,** and **136** to corresponding systems **102, 104,** and **106** on aircraft **100** may be placed at a limited number of substantially fixed locations on aircraft **100.** Therefore, an operator may need to be at a location on aircraft **100** that is near the location of one of dedicated operator interfaces **128, 130,** and **132,** or move to such a location on aircraft **100,** to use one of dedicated operator interfaces **128, 130,** or **132** to control or receive information reports from a corresponding one of systems **102, 104,** and **106** on aircraft **100.** Alternatively, one or more of connections **133, 134,** and **136** between dedicated operator interfaces **128, 130,** and **132** and corresponding systems **102, 104,** and **106** on aircraft **100** may be wireless connections.

Communications system **138** may be configured to provide communications between aircraft **100** and off board systems **140.** Communications system **138** may comprise any appropriate devices or systems for providing communications between aircraft **100** and off board systems **140** while aircraft **100** is in flight or on the ground. Off board systems **140** may include any appropriate number of systems that are not located on aircraft **100.**

Aircraft network data processing system **142** may be connected to systems **102, 104,** and **106** on aircraft **100** and to communications system **138** by aircraft network **144.** Aircraft network **144** may be implemented in any appropriate manner to provide for the exchange of data between aircraft network data processing system **142** and systems **102, 104,** and **106** on aircraft **100** and between aircraft network data processing system **142** and communications system **138.** For example, aircraft network **144** may be implemented as an appropriate wired network on aircraft **100.** Alternatively, appropriate portions of aircraft network **144** may be wireless.

Aircraft network **144** may be implemented as more than one network on aircraft **100.** For example, without limitation, aircraft network **144** may be implemented as a network of appropriate networks on aircraft **100.**

Aircraft network **144** may be connected to other aircraft network **146** by an appropriate network interface **148.** Aircraft network data processing system **142** may exchange data with a system connected to other aircraft network **146** via aircraft network **144,** network interface **148,** and other aircraft network **146.** For example, without limitation, aircraft network **144** and other aircraft network **146** may be associated with different levels of security on aircraft **100.** For example, aircraft network **144** may comprise a relatively open data network configured for the exchange of data between various systems on aircraft **100** at a relatively low level of security. Other aircraft network **146** may be configured for the exchange of data between various other systems on aircraft **100** at a higher level of security. In this case, network interface **148** may be configured to maintain security between aircraft network **144** and other aircraft network **146** as data is exchanged between aircraft network **144** and other aircraft network **146.**

Aircraft network data processing system **142** also may be connected to wireless network **152** on aircraft **100.** Wireless network **152** may be implemented on aircraft **100** in any appropriate manner. For example, wireless network **152** may comprise local area network **154** or another appropriate wireless network on aircraft **100.** For example, without limitation, wireless network **152** may comprise all or part of an integrated wireless network for an aircraft as described in U.S. Patent Application Publication No. 2011/0195656, which is incorporated herein by reference.

Wireless network **152** may be configured to provide wireless connection **156** for wireless **157** mobile device **158** and wireless connection **160** for wireless **161** mobile device **162.** Wireless network **152** may be configured to provide wireless connections for any appropriate number of wireless mobile devices in accordance with an illustrative embodiment.

Wireless network **152** may comprise any appropriate number of wireless access points **164.** For example, an appropriate number of wireless access points **164** may be provided at various locations in aircraft **100** so that mobile device **158** and mobile device **162** may establish and maintain wireless connection **156** and wireless connection **160,** respectively, with wireless network **152** from a plurality of appropriate different locations **165** in aircraft **100.**

Wireless network **152** may comprise security system **166.** Security system **166** may be configured to determine whether mobile devices **158** and **162** are authorized to connect to wireless network **152.** Security system **166** may be implemented in wireless network **152** in any appropriate manner.

Mobile device **158** and mobile device **162** may be configured to allow an operator to identify controls for controlling any number of functions **108, 110, 112, 114,** and **116** performed by systems **102, 104,** and **106** on aircraft **100.** Such controls may be sent from mobile device **158** and mobile device **162** via wireless connection **156** and wireless connection **160,** respectively, to wireless network **152.**

The controls from mobile device **158** and mobile device **162** may be received by aircraft network data processing system **142** via wireless network **152.** Aircraft network data processing system **142** may be configured to deliver the controls received from mobile device **158** and mobile device **162** via wireless network **152** to an appropriate one or more of systems **102, 104,** and **106** to control one or more of functions **108, 110, 112, 114,** and **116** performed by systems **102, 104,** and **106.** For example, aircraft network data processing system **142** may comprise router **168** that may be configured to route controls for controlling one or more of functions **108, 110, 112, 114,** and **116** to the appropriate one or more of systems **102, 104,** and **106** via aircraft network **144.**

Aircraft network data processing system **142** also may be configured to receive reports of information **118** and information **120** from system **102** and system **106** on aircraft **100** via aircraft network **144.** Aircraft network data processing system **142** may be configured to send the reports of information **118** and information **120** from system **102** and system **106** to mobile device **158** and mobile device **162** via wireless network **152.**

Mobile device **158** and mobile device **162** may be configured to receive the reports from system **102** and system **106** on aircraft **100** via wireless connection **156** and wireless connection **160.** Mobile device **158** and mobile device **162** also may be configured to display the reports received from system **102** and system **106** on aircraft **100** to an operator in an appropriate manner, to store the reports received from system **102** and system **106,** or to both display and store the reports.

Mobile device **170** may be connected to aircraft network data processing system **142** by wired connection **172.** Therefore, mobile device **170** may be referred to as wired **171** mobile device **170.** Mobile device **170** may be configured to perform the same functions for system control and reporting as mobile device **158** and mobile device **162** from various different locations **165** on aircraft **100.** However, mobile device **170** may be less mobile than mobile device **158** and mobile device **162.**

Mobile device **162** also may be configured to be connected to aircraft network data processing system **142** by wired connection **173.** Therefore, mobile device **162** also may be referred to as wired **174** mobile device **162.** In this case, mobile device **162** may be both wireless **161** and wired **174.** For example, without limitation, a laptop computer or other device used for maintenance of aircraft **100** may be an example of mobile device **162** that may be both wireless **161** and wired **174.**

Aircraft network data processing system **142** may comprise security system **175.** Security system **175** may be configured to determine whether mobile device **162** and mobile device **170** are authorized to communicate with aircraft network data processing system **142** via wired connection **173** and wireless connection **172,** respectively. Security system **175** may be implemented in aircraft network data processing system **142** in any appropriate manner.

Security system **175** also may be used in the process for determining whether wireless ones of mobile device **158** and mobile device **162** may connect to wireless network **152.** For example, in a certificate based implementation for providing security, security system **166** in wireless network **152** may hand authentication requests from wireless ones of mobile device **158** and mobile device **162** to security system **175** in aircraft network data processing system **142** for verification.

The system control and reporting functions provided to an operator by mobile devices **158, 162,** and **170** may be defined by system control applications **176.** For example, system control applications **176** may be stored by aircraft network data processing system **142.** System control applications **176** may be downloaded by mobile device **158** and mobile device **162** from aircraft network data processing system **142** via wireless connection **156** and wireless connection **160,** respectively, to wireless network **152.** System control applications **176** then may be run on mobile devices **158** and **162.**

Alternatively, system control applications **176** may be run on aircraft network data processing system **142.** In this case, the functionality of system control applications **176** may be accessed by mobile device **158** and mobile device **162** via wireless connection **156** and wireless connection **160,** respectively, to wireless network **152.** Similarly, system control applications **176** may be downloaded to mobile devices **16** and mobile device **170** from aircraft network data processing system **142** for running on mobile device **162** and mobile device **170,** or run on aircraft network data processing system **142** and accessed by mobile device **162** and mobile device **170** via wired connection **173** and wireless connection **172,** respectively.

System control applications **176** also may provide appropriate security functions **178.** For example, security functions **178** in system control applications **176** may be configured to determine whether mobile device **158, 162,** or **170** is allowed to control or receive information from a particular system **102, 104,** or **106** on aircraft **100.**

The illustration of **Figure 1** is not meant to imply physical or architectural limitations to the manner in which different illustrative embodiments may be implemented. Other components in addition to, in place of, or both in addition to and in place of the ones illustrated may be used. Some components may be unnecessary in some illustrative embodiments. Also, the blocks are presented to illustrate some functional components. One or more of these blocks may be combined or divided into different blocks when implemented in different illustrative embodiments.

For example, mobile devices **158, 162,** and **170** may be configured to control systems **102, 104,** and **106** on aircraft **100** by a direct connection from mobile devices **158, 162,** and **170** to systems **102, 104,** and **106** that does not include aircraft network data processing system **142** or wireless network **152.**

Aircraft **100** is one example of a platform in which an illustrative embodiment may be implemented. System control via a mobile device in accordance with an illustrative embodiment may be implemented to control a plurality of different systems and functions in various platforms other than aircraft **100.** Reporting via a mobile device in accordance with an illustrative embodiment may be implemented to provide reporting for a plurality of different systems in various platforms other than aircraft **100.**

For example, the illustrative embodiments may be implemented to provide system control and reporting via a mobile device for various systems in a vehicle or other mobile platform that may be configured to travel through air, in space, on land, on the surface of water, underwater, or in any other medium or combination of media. The illustrative embodiments also may be implemented to provide system control and reporting via a mobile device for various systems in a non-mobile platform.

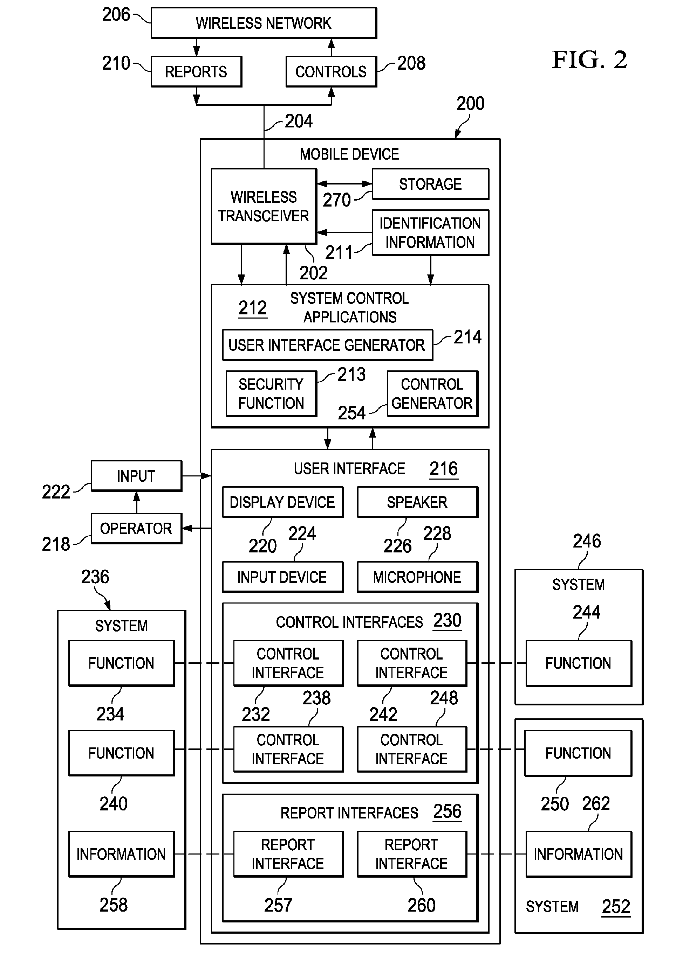

Turning **Figure 2****,** an illustration of a block diagram of a mobile device for aircraft system control and reporting is depicted in accordance with an illustrative embodiment. Mobile device **200** may be an example of one implementation of mobile devices **158, 162,** and **170** in **Figure 1****.**

Mobile device **200** may include wireless transceiver **202.** Wireless transceiver **202** may be configured to provide wireless connection **204** to wireless network **206.** Therefore, mobile device **200** may be referred to as a wireless device. Wireless transceiver **202** may be configured to send controls **208** and other data to wireless network **206** via wireless connection **204.** Wireless transceiver **202** also may be configured to receive reports **210** and other data from wireless network **206** via wireless connection **204.**

Alternatively, or in addition, mobile device **200** may be configured to be connected to an aircraft network data processing system by an appropriate wired connection. In this case, controls **208** and other data may be sent to the aircraft network data processing system via the wired connection and reports **210** and other data may be configured to be received from the aircraft network data processing system via the wired connection.

Mobile device **200** may include identification information **211.** Identification information **211** may be provided to wireless network **206** and used by a security system associated with wireless network **206** to determine whether mobile device **200** is authorized to connect to wireless network **206.**

System control applications **212** may be run on mobile device **200.** System control applications **212** may be loaded on mobile device **200** for running on mobile device **200** in any appropriate manner. For example, without limitation, system control applications **212** may be downloaded to mobile device **200** from wireless network **206** via wireless connection **204.** Alternatively, system control applications **212** may be run on an aircraft network data processing system and accessed by mobile device **200** via wireless connection **204** to wireless network **206.**

System control applications **212** may include security function **213.** Security function **213** may be configured to determine whether mobile device **200** is allowed to use system control applications **212** to control particular systems on the aircraft or to receive reports **210** from such systems. For example, without limitation, security function **213** may be configured to use identification information **211** for mobile device **200** to determine whether mobile device **200** is allowed to send controls **208** to or receive reports **210** from particular systems on an aircraft.

System control applications **212** may include user interface generator **214.** User interface generator **214** may be configured to generate user interface **216.** User interface **216** may be displayed to operator **218** on any appropriate display device **220.** Input **222** may be received from operator **218** via any appropriate input device **224.** For example, without limitation, display device **220** and input device **224** may be combined in a single device, such as a touch screen display. Mobile device **200** also may comprise speaker **226** for presenting information to operator **218** in audible form. Mobile device **200** also may include microphone **228** for receiving input **222** from operator **218** by voice or in another audible form.

User interface **216** may comprise a number of control interfaces **230** for controlling functions performed by various different systems on an aircraft. For example, control interface **232** may be configured for controlling function **234** performed by system **236** on the aircraft. Control interface **238** may be configured for controlling function **240** performed by system **236** on the aircraft. Control interface **242** may be configured for controlling function **244** performed by system **246** on the aircraft. Control interface **248** may be configured for controlling function **250** performed by system **252** on the aircraft.

System control applications **212** may include control generator **254.** Control generator **254** may be configured to generate controls **208** for controlling the functions performed by various systems on an aircraft in response to input **222** from operator **218** to control interfaces **230.** Controls **208** generated by control generator **254** may be sent to the various systems on the aircraft via wireless connection **204** and wireless network **206.**

For example, without limitation, a number of control interfaces **230** may be configured for controlling one or more of system **236,** system **246,** and system **252** to send reports **210** to mobile device **200.** Alternatively, or in addition, one or more of system **236,** system **246,** and system **252,** may be configured to send reports **210** to mobile device **200** in response to a request from operator **218** or from another entity that may be provided to one or more of system **236,** system **246,** and system **252** in another appropriate manner. Alternatively, or additionally, one or more of system **236,** system **246,** and system **252** may be configured to send reports **210** to mobile device **200** automatically on a periodic basis, in response to the occurrence of an event, or both on a periodic basis and in response to the occurrence of an event.

User interface **216** also may include report interfaces **256.** Report interfaces **256** may be configured for displaying reports **210** received by mobile device **200** from various different systems on an aircraft. For example, without limitation, user interface generator **214** may be configured to generate report interfaces **256** in response to mobile device **200** receiving reports **210** via wireless connection **204** to wireless network **206.** For example, report interface **257** may be configured to display a report of information **258** from system **236** on an aircraft. Report interface **260** may be configured to display a report of information **262** from system **252** on the aircraft.

Mobile device **200** also may be configured to store reports **210** received by mobile device **200** from various different systems on the aircraft. For example, reports **210** received by mobile device **200** may be stored in storage **270** on mobile device **200.** Storage **270** may be implemented using any appropriate memory device or other device for storing reports **210** on mobile device **200.** For example, without limitation, reports **210** may be transferred from storage **270** to another device or system for review and analysis at a later appropriate time.

The illustration of **Figure 2** is not meant to imply physical or architectural limitations to the manner in which different illustrative embodiments may be implemented. Other components in addition to, in place of, or both in addition to and in place of the ones illustrated may be used. Some components may be unnecessary in some illustrative embodiments. Also, the blocks are presented to illustrate some functional components. One or more of these blocks may be combined or divided into different blocks when implemented in different illustrative embodiments.

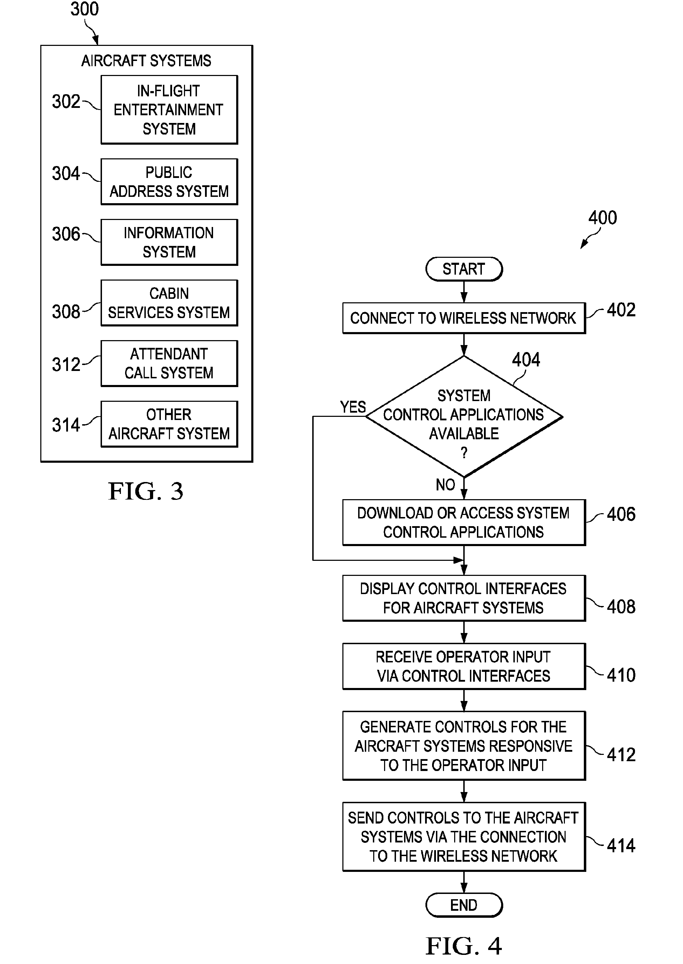

Turning to **Figure 3****,** an illustration of a block diagram of aircraft systems is depicted in accordance with an illustrative embodiment. In this example, aircraft systems **300** may be examples of implementations of system **102,** system **104,** and system **106** in aircraft **100** in **Figure 1****.**

Aircraft systems **300** may include in-flight entertainment system **302,** public address system **304,** information system **306,** cabin services system **308,** attendant call system **312,** other aircraft system **314,** or various combinations of systems on an aircraft. The various functions performed by aircraft systems **300** may depend on the aircraft on which aircraft systems **300** are implemented. Different functions and combinations of functions may be performed by different aircraft systems **300** on different aircraft. For example, without limitation, various functions performed by public address system **304** and attendant call system **312** may be included in cabin services system **308** in one implementation of aircraft systems **300.**

Turning to **Figure 4****,** an illustration of a flowchart of a process for controlling aircraft systems via a mobile device is depicted in accordance with an illustrative embodiment. For example, process **400** may be implemented in mobile device **200** in **Figure 2****.**

Process **400** may begin by connecting the mobile device to a wireless network on an aircraft (operation **402).** It then may be determined whether system control applications are available on the mobile device (operation **404).** If system control applications are not available on the mobile device, system control applications may be downloaded or accessed by the mobile device via the wireless connection (operation **406).**

The system control applications may be used to display control interfaces for controlling functions performed by various systems on the aircraft (operation **408).** Operator input may be received via the displayed control interfaces (operation **410).** Controls for controlling functions performed by various systems on the aircraft may be generated in response to the operator input (operation **412).**

The controls then may be sent to the various systems on the aircraft via the connection to the wireless network (operation **414),** with the process terminating thereafter. With reference again to operation **404,** if the system control applications are available, the process proceeds to operation 408 as described above.

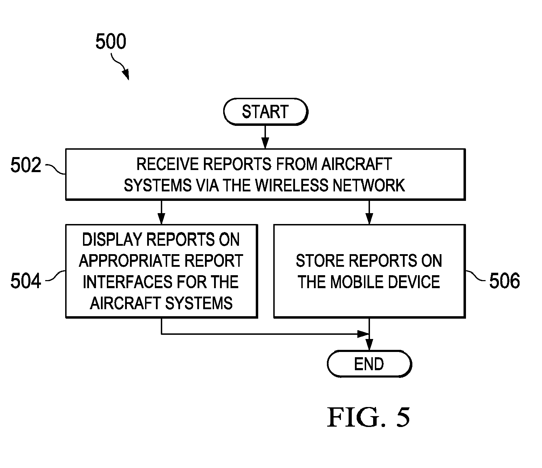

Turning to **Figure 5****,** an illustration of a flowchart of a process for aircraft system reporting via a mobile device is depicted in accordance with an illustrative embodiment. In this example, process **500** may be implemented in mobile device **200** in **Figure 2****.** Process **500** may be implemented by a system control application after the mobile device is connected to a wireless network on an aircraft.

Process **500** may begin by receiving reports from systems on an aircraft via the wireless network (operation **502).** The received reports then may be displayed on appropriate report interfaces for the aircraft systems (operation **504),** with the process terminating thereafter. Alternatively, or in addition, the received reports may be stored on the mobile device (operation **506),** with the process terminating thereafter. For example, without limitation, the received reports may be stored on the mobile device and transferred from the mobile device to another device or system for review and analysis at a later appropriate time.

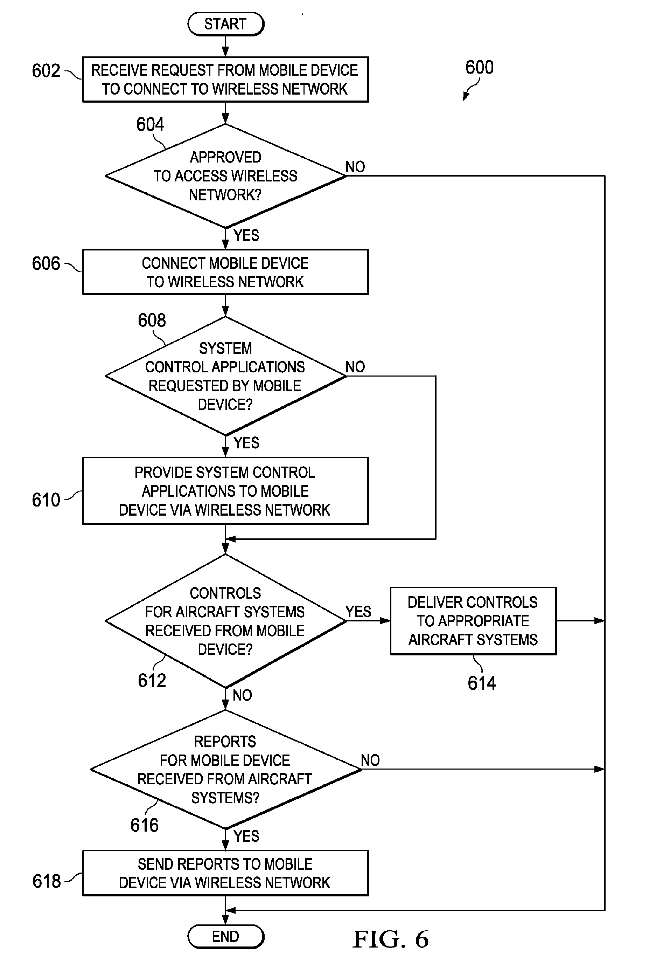

Turning to **Figure 6****,** an illustration of a flowchart of a process for aircraft system control and reporting is depicted in accordance with an illustrative embodiment. In this illustrative example, process **600** may be implemented in aircraft network data processing system **142** and wireless network **152** on aircraft **100** in **Figure 1****.**

Process **600** may begin by receiving a request from a mobile device to connect to a wireless network on an aircraft (operation **602).** It may be determined whether the mobile device is approved to access the wireless network (operation **604**). If it is determined that the mobile device is not approved to access the wireless network, the process terminates. If it is determined that the mobile device is approved to access the wireless network, the mobile device may be connected to the wireless network (operation **606**).

It then may be determined whether system control applications are requested by the mobile device (operation **608**). If system control applications are requested, the system control applications may be provided to the mobile device via the wireless network (operation **610**).

It then may be determined whether controls for controlling the functions performed by systems on the aircraft are received from a mobile device (operation **612**). In response to a determination that controls are received from a mobile device, the controls may be delivered to the appropriate aircraft systems (operation **614**), with the process terminating thereafter.

If controls are not received from a mobile device, it may be determined whether reports for a mobile device are received from the aircraft systems (operation **616**). If reports for a mobile device are not received from the aircraft systems, the process terminates. Otherwise, in response to receiving reports from the aircraft systems, the reports may be sent to the mobile device via the wireless network (operation **618**) with the process terminating thereafter.

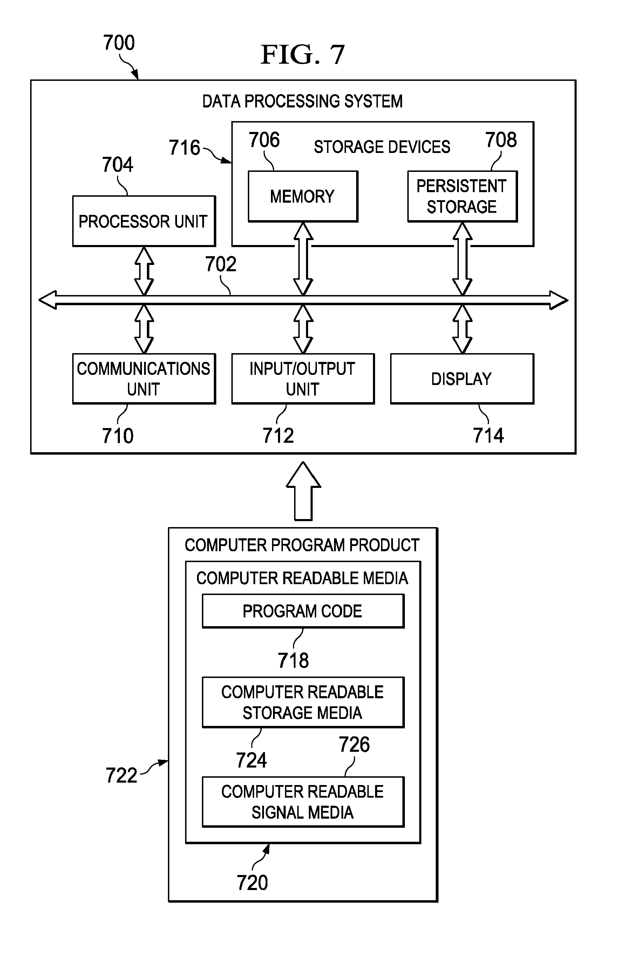

Turning now to **Figure 7****,** an illustration of a data processing system is depicted in accordance with an illustrative embodiment. Data processing system **700** may be an example of one implementation of aircraft network data processing system **142** in **Figure 1****.** Data processing system **700** also may be an example of one implementation of mobile device **200** in **Figure 2****.**

In this illustrative example, data processing system **700** includes communications fabric **702.** Communications fabric **702** provides communications between processor unit **704,** memory **706,** persistent storage **708,** communications unit **710,** input/output (I/O) unit **712,** and display **714.** Memory **706,** persistent storage **708,** communications unit **710,** input/output (I/O) unit **712,** and display **714** are examples of resources accessible by processor unit **704** via communications fabric **702.**

Processor unit **704** serves to run instructions for software that may be loaded into memory **706.** Processor unit **704** may be a number of processors, a multi-processor core, or some other type of processor, depending on the particular implementation. Further, processor unit **704** may be implemented using a number of heterogeneous processor systems in which a main processor is present with secondary processors on a single chip. As another illustrative example, processor unit **704** may be a symmetric multi-processor system containing multiple processors of the same type.

Memory **706** and persistent storage **708** are examples of storage devices **716.** A storage device is any piece of hardware that is capable of storing information such as, for example, without limitation, data, program code in functional form, and other suitable information either on a temporary basis or a permanent basis. Storage devices **716** may also be referred to as computer readable storage devices in these examples. Memory **706,** in these examples, may be, for example, a random access memory or any other suitable volatile or non-volatile storage device. Persistent storage **708** may take various forms, depending on the particular implementation.

Persistent storage **708** may contain one or more components or devices. For example, persistent storage **708** may be a hard drive, a flash memory, a rewritable optical disk, a rewritable magnetic tape, or some combination of the above. The media used by persistent storage **708** also may be removable. For example, a removable hard drive may be used for persistent storage **708.**

Communications unit **710,** in these examples, provides for communications with other data processing systems or devices. In these examples, communications unit **710** is a network interface card. Communications unit **710** may provide communications through the use of either or both physical and wireless communications links.

Input/output unit **712** allows for input and output of data with other devices that may be connected to data processing system **700.** For example, input/output unit **712** may provide a connection for user input through a keyboard, a mouse, and/or some other suitable input device. Further, input/output unit **712** may send output to a printer. Display **714** provides a mechanism to display information to a user.

Instructions for the operating system, applications, and/or programs may be located in storage devices **716,** which are in communication with processor unit **704** through communications fabric **702.** In these illustrative examples, the instructions are in a functional form on persistent storage **708.** These instructions may be loaded into memory **706** for execution by processor unit **704.** The processes of the different embodiments may be performed by processor unit **704** using computer-implemented instructions, which may be located in a memory, such as memory **706.**

These instructions may be referred to as program instructions, program code, computer usable program code, or computer readable program code that may be read and executed by a processor in processor unit **704.** The program code in the different embodiments may be embodied on different physical or computer readable storage media, such as memory **706** or persistent storage **708.**

Program code **718** is located in a functional form on computer readable media **720** that is selectively removable and may be loaded onto or transferred to data processing system **700** for execution by processor unit **704.** Program code **718** and computer readable media **720** form computer program product **722** in these examples. In one example, computer readable media **720** may be computer readable storage media **724** or computer readable signal media **726.**

Computer readable storage media **724** may include, for example, an optical or magnetic disk that is inserted or placed into a drive or other device that is part of persistent storage **708** for transfer onto a storage device, such as a hard drive, that is part of persistent storage **708.** Computer readable storage media **724** also may take the form of a persistent storage, such as a hard drive, a thumb drive, or a flash memory, that is connected to data processing system **700.** In some instances, computer readable storage media **724** may not be removable from data processing system **700.**

In these examples, computer readable storage media **724** is a physical or tangible storage device used to store program code **718** rather than a medium that propagates or transmits program code **718.** Computer readable storage media **724** is also referred to as a computer readable tangible storage device or a computer readable physical storage device. In other words, computer readable storage media **724** is a media that can be touched by a person.

Alternatively, program code **718** may be transferred to data processing system **700** using computer readable signal media **726.** Computer readable signal media **726** may be, for example, a propagated data signal containing program code **718.** For example, computer readable signal media **726** may be an electromagnetic signal, an optical signal, or any other suitable type of signal. These signals may be transmitted over communications links, such as wireless communications links, optical fiber cable, coaxial cable, a wire, or any other suitable type of communications link. In other words, the communications link or the connection may be physical or wireless in the illustrative examples.

In some illustrative embodiments, program code **718** may be downloaded over a network to persistent storage **708** from another device or data processing system through computer readable signal media **726** for use within data processing system **700.** For instance, program code stored in a computer readable storage medium in a server data processing system may be downloaded over a network from the server to data processing system **700.** The data processing system providing program code **718** may be a server computer, a client computer, or some other device capable of storing and transmitting program code **718.**

The different components illustrated for data processing system **700** are not meant to provide architectural limitations to the manner in which different embodiments may be implemented. The different illustrative embodiments may be implemented in a data processing system including components in addition to and/or in place of those illustrated for data processing system **700.** Other components shown in **Figure 7** can be varied from the illustrative examples shown. The different embodiments may be implemented using any hardware device or system capable of running program code. As one example, data processing system **700** may include organic components integrated with inorganic components and/or may be comprised entirely of organic components excluding a human being. For example, a storage device may be comprised of an organic semiconductor.

In another illustrative example, processor unit **704** may take the form of a hardware unit that has circuits that are manufactured or configured for a particular use. This type of hardware may perform operations without needing program code to be loaded into a memory from a storage device to be configured to perform the operations.

For example, when processor unit **704** takes the form of a hardware unit, processor unit **704** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. With this type of implementation, program code **718** may be omitted, because the processes for the different embodiments are implemented in a hardware unit.

In still another illustrative example, processor unit **704** may be implemented using a combination of processors found in computers and hardware units. Processor unit **704** may have a number of hardware units and a number of processors that are configured to run program code **718.** With this depicted example, some of the processes may be implemented in the number of hardware units, while other processes may be implemented in the number of processors.

In another example, a bus system may be used to implement communications fabric **702** and may be comprised of one or more buses, such as a system bus or an input/output bus. Of course, the bus system may be implemented using any suitable type of architecture that provides for a transfer of data between different components or devices attached to the bus system.

Additionally, communications unit **710** may include a number of devices that transmit data, receive data, or transmit and receive data. Communications unit **710** may be, for example, a modem or a network adapter, two network adapters, or some combination thereof. Further, a memory may be, for example, memory **706,** or a cache, such as found in an interface and memory controller hub that may be present in communications fabric **702.**

The flowcharts and block diagrams described herein illustrate the architecture, functionality, and operation of possible implementations of systems, methods, and computer program products according to various illustrative embodiments. In this regard, each block in the flowcharts or block diagrams may represent a module, segment, or portion of code, which comprises one or more executable instructions for implementing the specified logical function or functions. It should also be noted that, in some alternative implementations, the functions noted in a block may occur out of the order noted in the figures. For example, the functions of two blocks shown in succession may be executed substantially concurrently, or the functions of the blocks may sometimes be executed in the reverse order, depending upon the functionality involved.

The description of illustrative embodiments is presented for purposes of illustration and description and is not intended to be exhaustive or to limit the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method of controlling a plurality of different systems on an aircraft, comprising:
connecting a mobile device to an aircraft network on the aircraft, wherein the mobile device is moveable to a plurality of different locations on the aircraft;
receiving, by the mobile device, input from an operator identifying controls for controlling functions performed by the plurality of different systems on the aircraft; and
sending the controls from the mobile device to the plurality of different systems on the aircraft via the aircraft network.

2. The method of claim 1, wherein:
connecting the mobile device to the aircraft network comprises connecting the mobile device to a wireless network on the aircraft via a wireless connection; and
sending the controls from the mobile device to the plurality of different systems on the aircraft comprises sending the controls from the mobile device to the aircraft network via the wireless connection.

3. The method of claim 1, wherein:
connecting the mobile device to the aircraft network comprises connecting the mobile device to the aircraft network via a wired connection; and
sending the controls from the mobile device to the plurality of different systems on the aircraft comprises sending the controls from the mobile device to the aircraft network via the wired connection.

4. The method of any of claims 1-3 further comprising:
displaying a plurality of control interfaces for the functions performed by the plurality of different systems on a user interface on the mobile device; and
receiving the input from the operator via the plurality of control interfaces on the user interface.

5. The method of any of claims 1-4 further comprising:
receiving, by the mobile device, reports from the plurality of different systems on the aircraft via the aircraft network; and
storing the reports on the mobile device.

6. The method of any of claims 1-5 further comprising:
receiving, by the mobile device, reports from the plurality of different systems on the aircraft via the aircraft network; and
displaying the reports on a plurality of report interfaces for the plurality of different systems on a user interface on the mobile device.

7. The method of any of claims 1-6, wherein the plurality of different systems on the aircraft are selected from an in-flight entertainment system, a public address system, an information system, a cabin services system, and an attendant call system.

8. An apparatus, comprising:
an aircraft network data processing system on an aircraft, wherein the aircraft network data processing system is configured to:
receive controls for controlling functions performed by a plurality of different systems on the aircraft from a mobile device, wherein the mobile device is moveable to a plurality of different locations on the aircraft; and
deliver the controls received from the mobile device to the plurality of different systems.

9. The apparatus of claim 8, wherein the aircraft network data processing system is configured to receive the controls from the mobile device via a wired connection to the mobile device.

10. The apparatus of any of claims 8 or 9, wherein the aircraft network data processing system is configured to receive the controls from the mobile device via a wireless network.

11. The apparatus of any of claims 8-10, wherein the aircraft network data processing system is configured to provide a number of system control applications to the mobile device, wherein the number of system control applications define control interfaces for the functions performed by the plurality of different systems.

12. The apparatus of any of claims 8-11, wherein the mobile device is configured to:
display a plurality of control interfaces for the functions performed by the plurality of different systems on a user interface on the mobile device; and
receive input identifying the controls from an operator via the plurality of control interfaces on the user interface.

13. The apparatus of any of claims 8-12, wherein the aircraft network data processing system is configured to receive reports from the plurality of different systems and to send the reports to the mobile device.

14. The apparatus of claim 13, wherein the mobile device is configured to display the reports on a plurality of report interfaces for the plurality of different systems on a user interface on the mobile device.

15. The apparatus of any of claims 8-14, wherein the plurality of different systems on the aircraft are selected from an in-flight entertainment system, a public address system, an information system, a cabin services system, and an attendant call system.
